# FASCICULE DE BREVET EUROPEEN

(11) **EP 3 867 114 B1**
(45) Date de publication et mention de la délivrance du brevet: **13.07.2022**
(21) Numéro de dépôt: 19786377.2
(22) Date de dépôt: 10.09.2019
(51) Int. Cl.: B60W 10/06, B60W 10/02, B60W 30/18, B60W 30/20, B60W 10/18, F02N 11/08

(54) **PROCEDE D'INHIBITION D'UN ARRET DE MOTEUR THERMIQUE POUR UNE CHAINE DE TRACTION DE VEHICULE AUTOMOBILE**
VERFAHREN ZUM VERHINDERN DES ANHALTENS EINER WÄRMEKRAFTMASCHINE FÜR EINE ANTRIEBSKETTE EINES KRAFTFAHRZEUGS
METHOD FOR INHIBITING STOPPING OF A HEAT ENGINE FOR A DRIVE CHAIN OF A MOTOR VEHICLE

(30) Priorité: 15.10.2018 FR 1859529
(43) Date de publication de la demande: 25.08.2021
(73) Titulaire: PSA Automobiles SA, 78300 Poissy (FR)
(72) Inventeur: BALENGHIEN, Olivier, 93390 CLICHY SOUS BOIS (FR); CHABARDES, Fanny, 92210 ST CLOUD (FR)
(86) Numéro de dépôt international: PCT/FR2019/052085
(87) Numéro de publication internationale: WO 2020/079332

(56) Documents cités:
- DE-A1-102009 047 052
- DE-A1-102014 207 884
- FR-A1- 3 056 955

## Description

La présente invention porte sur un procédé d'inhibition d'un arrêt de moteur thermique pour une chaîne de traction de véhicule automobile.

On connaît, par exemple par l'intermédiaire du document DE102014207884 A1, des chaînes de traction comportant un moteur thermique, une boîte de vitesses associée à un dispositif de filtrage des acyclismes dudit moteur thermique, ainsi qu'un embrayage monté d'une part entre le dispositif de filtrage des acyclismes et d'autre part la boîte de vitesses. Une sortie de la boîte de vitesses est reliée à un différentiel, lequel est relié aux roues par l'intermédiaire de transmissions transversales.

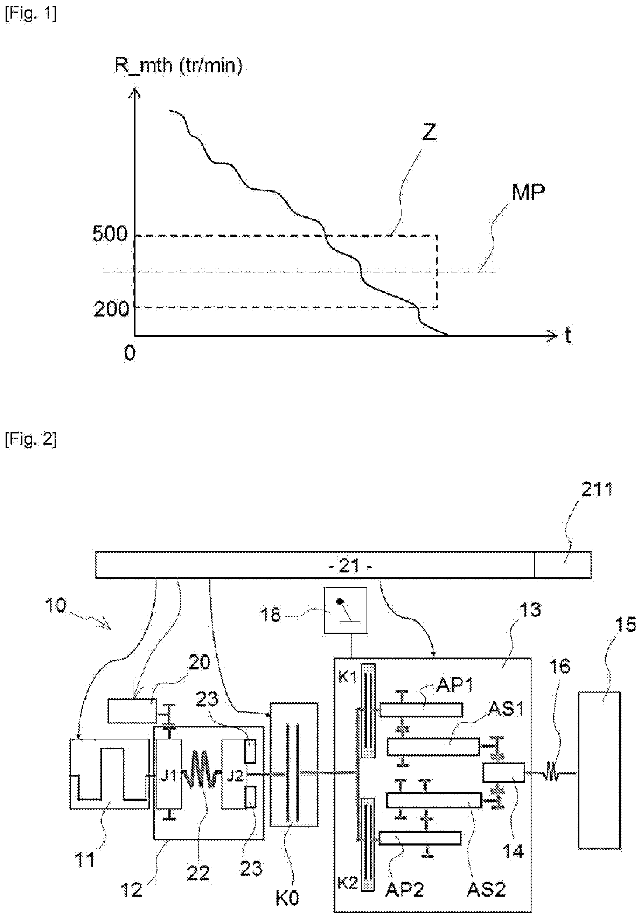

Suivant certaines architectures, le dispositif de filtrage des acyclismes prend la forme d'un double volant amortisseur de type pendulaire. Or, on s'est aperçu que les pendules de ce dispositif engendrent une bruyance lors des phases de démarrages et d'arrêts du moteur thermique sous le régime de ralenti, en particulier lors de la traversée d'une zone d'excitation du mode propre du double volant amortisseur. Comme cela est représenté sur la figure 1 montrant l'évolution du régime R_mth du moteur thermique en fonction du temps t lors de son arrêt, la plage de régime correspondant à la zone d'excitation Z du mode propre MP du double volant amortisseur pendulaire est comprise entre 200 tours/min et 500 tours/min.

Afin d'éviter ce désagrément, une stratégie consiste à prélever un couple au moteur thermique lors de sa phase d'arrêt en fermant l'embrayage partiellement. Dans le cas où le levier de vitesses est dans une position de conduite "D" ("Drive" en anglais), il ne se pose aucun problème de nuisance sonore lors de l'arrêt du moteur thermique.

En revanche, dans le cas où le levier de vitesses est dans une position neutre "N" ("Neutral" en anglais), il est impossible à la boîte de vitesses de transmettre un couple au système de freinage pour générer un couple résistant. En effet, si le levier de vitesses est en position neutre, l'embrayage doit rester ouvert afin qu'aucun couple ne passe par la boîte de vitesses pour des questions de sécurité de fonctionnement. Or, il n'est pas possible de contourner cette exigence qui est une exigence de sureté de fonctionnement.

L'invention vise à remédier efficacement à cet inconvénient en proposant un procédé de pilotage d'une chaîne de traction pour véhicule automobile comportant:
- un moteur thermique,
- un dispositif de filtrage des acyclismes du moteur thermique,
- une boîte de vitesses automatique associée à un levier de vitesses,
- un embrayage monté d'une part entre le dispositif de filtrage des acyclismes du moteur thermique et d'autre part la boîte de vitesses,
caractérisé en ce que ledit procédé comporte:
- une étape de détection de conditions autorisant un lancement d'une procédure d'arrêt du moteur thermique, et
- dans le cas où le levier de vitesses est dans une position de conduite autorisant une fermeture de l'embrayage, ledit procédé comporte une étape de prélèvement de couple au moteur thermique, par fermeture au moins partielle de l'embrayage, de façon à accélérer une chute de régime du moteur thermique lors de son arrêt, ou
- dans le cas où le levier de vitesses est dans une position neutre dans laquelle l'embrayage doit demeurer ouvert, ledit procédé comporte une étape d'inhibition d'arrêt dudit moteur thermique.

L'invention permet ainsi, en inhibant l'arrêt du moteur thermique lorsque le levier de vitesses est au neutre, de réduire le nombre d'occurrences d'arrêts susceptibles de générer une bruyance des pendules du double volant amortisseur pendulaire.

Selon une mise en œuvre, les conditions autorisant le lancement de la procédure d'arrêt du moteur thermique sont constituées par la détection d'un appui sur une pédale de frein, ainsi que la détection d'une vitesse du véhicule automobile sous un seuil prédéfini.

Selon une mise en œuvre, des conditions autorisant un arrêt du moteur thermique sont vérifiées avant de prélever le couple au moteur thermique.

Selon une mise en œuvre, les conditions autorisant un arrêt du moteur thermique sont vérifiées notamment lorsqu'un niveau de stockage d'une batterie du véhicule est supérieur à un seuil de chargement et lorsqu'une température du moteur thermique est inférieure à un seuil de température.

Selon une mise en œuvre, le couple prélevé au moteur thermique est compris entre 2 et 15 Nm.

Selon une mise en œuvre, le couple prélevé au moteur thermique est repris par un système de freinage du véhicule automobile.

Selon une mise en œuvre, le moteur thermique est un moteur turbocompressé à trois cylindres de type essence.

Selon une mise en œuvre, la boîte de vitesses est une boîte de vitesses à double embrayage.

Selon une mise en œuvre, le dispositif de filtrage des acyclismes est un double volant amortisseur de type pendulaire.

L'invention a également pour objet un calculateur moteur caractérisé en ce qu'il comporte une mémoire stockant des instructions logicielles pour la mise en œuvre du procédé de pilotage d'une chaîne de traction tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

[Fig. 1], déjà décrite, représente l'évolution du régime du moteur thermique en fonction du temps lors de son arrêt pour mettre en évidence la plage de régime correspondant à la zone d'excitation du mode propre du double volant amortisseur;

[Fig. 2] est une représentation schématique d'une chaîne de traction mettant en œuvrele procédé selon l'invention d'inhibition d'un arrêt du moteur thermique lorsque le levier de vitesses se trouve en position neutre;

[Fig. 3] est un diagramme des différentes étapes du procédé selon l'invention d'inhibition d'un arrêt du moteur thermique lorsque le levier de vitesses se trouve en position neutre.

La figure 2 montre une chaîne de traction 10 pour véhicule automobile comportant un moteur thermique 11 associé à un dispositif de filtrage des acyclismes 12 du moteur thermique 11, ainsi qu'une boîte de vitesses 13. Un embrayage K0 est monté d'une part entre le dispositif de filtrage des acyclismes 12 du moteur thermique 11 et d'autre part la boîte de vitesses 13. Une sortie de la boîte de vitesses 13 est reliée à un différentiel 14, lequel est relié aux roues 15 par l'intermédiaire de transmissions transversales 16. La boîte de vitesses 13 est associée à un levier de vitesses 18.

Un démarreur 20 appartient à un système d'arrêt et de re-démarage automatique du moteur thermique 11, notamment en fonction des conditions de circulation (système dit "STT" pour "Stop and Start" en anglais). Le démarreur 20 est avantageusement un démarreur renforcé comportant un moteur électrique ainsi qu'un pignon destiné à engrener avec une couronne de démarrage du moteur thermique 11. Par démarreur "renforcé", on entend un démarreur présentant des pièces constitutives (balais élargis, porte-balais, réducteur de vitesse, contacteur, lanceur, pignon d'engrènement) ayant une configuration permettant de supporter 300000 à 400000 cycles de fonctionnement. Un tel démarreur 20 présente l'avantage d'être robuste et peu onéreux.

Un calculateur moteur 21 de la chaîne de traction 10 est apte à piloter les différents éléments 11, K0, 13, et 20 de la chaîne de traction 10.

De préférence, le moteur thermique 11 est un moteur turbocompressé à trois cylindres de type essence, car cela correspond à une configuration optimale en termes de rendement, de performances, de consommation, et d'émissions réduites de particules polluantes. En variante, le moteur thermique 11 pourra toutefois être un moteur atmosphérique, ou un moteur de type diesel. Le nombre de cylindres peut être différent de trois, en valant notamment deux ou quatre ou plus. Cela dépend de l'application et en particulier de la puissance du véhicule recherchée.

Le moteur thermique 11 est relié mécaniquement au dispositif de filtrage des acyclismes 12 qui est constitué d'un double volant amortisseur pendulaire pour filtrer au maximum les acyclismes du moteur thermique 11. Ce double volant amortisseur pendulaire 12 comporte une masse inertielle primaire J1 et une masse inertielle secondaire J2 reliées entre elles par des ressorts circonférentiels 22. En outre, la masse inertielle secondaire J2 comporte des pendules 23 ayant un débattement circonférentiel de quelques millimètres. Une telle configuration permet de réduire les bruits de boîtes de vitesses, notamment les bruits de grenaille qui ont pour origine l'acyclisme du moteur transmis aux pignons fous et arbres fous de la boîte de vitesses, ainsi que le bourdonnement à l'intérieur du véhicule qui a pour origine l'acyclisme du moteur transmis aux roues du véhicule.

La boîte de vitesses 13 est une boîte de vitesses automatique. Par "automatique", on entend une boîte de vitesses 13 dont les changements de rapport sont pilotés sans action de la part du conducteur et sans rupture de couple lors des changements de rapports. La boîte de vitesses 13 est avantageusement une boîte du type double embrayage (ou "DCT" pour "Dual Clutch Transmission" en anglais). Une telle boîte de vitesses 13 présente un meilleur rendement que les boîtes de vitesses automatiques conventionnelles pour une prestation en dynamique longitudinale et en agrément de conduite très proche.

Cette boîte de vitesses 13 comporte un premier embrayage K1 et un deuxième embrayage K2. Le premier embrayage K1 est associé à un premier couple d'arbre primaire AP1 et secondaire AS1 portant les rapports pairs. Le deuxième embrayage K2 est associé à un deuxième couple d'arbre primaire AP2 et secondaire AS2 portant les rapports impairs de la boîte de vitesses 13.

En fonctionnement, lorsqu'un rapport est engagé, on présélectionne le rapport suivant souhaité au moyen des synchroniseurs de la boîte 13. On réalise ensuite un croisement des embrayages K1, K2 pour effectuer le changement de rapport, ce qui permet de ne pas subir de rupture de couple dans la chaîne de traction 10. Ainsi, le conducteur ne se rend pas compte que le changement de rapport a eu lieu.

Il est à noter qu'une telle boîte de vitesses 13 présente une grande sensibilité aux acyclismes du moteur thermique 11 dans la mesure où, lorsqu'un rapport est engagé, l'arbre secondaire qui ne porte pas de pignon formant ledit rapport engagé est fou et génère un bruit de grenaille dû aux dents du pignon qui s'entrechoquent avec les dents de la couronne du différentiel 14. L'utilisation d'un double volant amortisseur pendulaire 12 est donc particulièrement bien adaptée pour filtrer les acyclismes du moteur thermique 11 en entrée de la boîte de vitesses 13, en particulier les acyclismes d'un moteur à trois cylindres qui sont plus importants que ceux d'un moteur à quatre cylindres (de même cylindrée). La configuration associant un moteur thermique 11 à trois cylindres, un double volant amortisseur pendulaire 12, ainsi qu'une boîte de vitesses à double embrayage 13 est donc optimale en termes de prestations acoustiques et vibratoires.

Le différentiel 14 disposé en sortie de la boîte de vitesses 13 est relié mécaniquement aux transmissions transversales 16 qui entraînent les roues 15 avant du véhicule. En variante, le différentiel 14 peut être couplé à une boîte de transfert (non représentée) pour équiper un véhicule à quatre roues motrices.

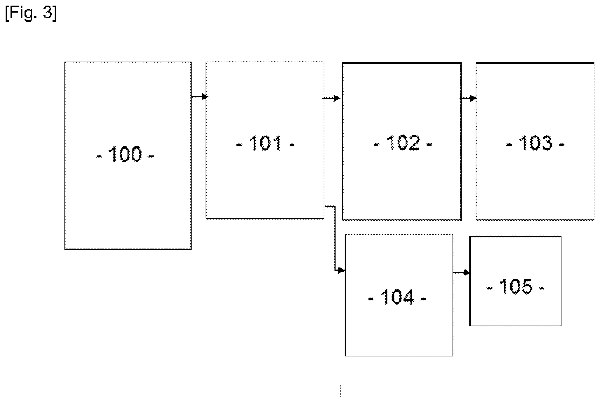

On décrit ci-après, en référence avec la figure 3, les différentes étapes du procédé selon l'invention d'inhibition de l'arrêt du moteur thermique de la chaîne de traction 10. A cet effet, le calculateur moteur 21 comporte une mémoire 211 stockant des instructions logicielles pour la mise en œuvre du procédé.

Au cours d'une étape 100, le calculateur moteur 21 détecte des conditions autorisant un lancement d'une procédure d'arrêt du moteur thermique 11. Ces conditions sont constituées par la détection d'un appui sur une pédale de frein, ainsi que la détection d'une vitesse du véhicule sous un seuil prédéfini, par exemple de l'ordre de 5km/h.

Au cours d'une étape 101, le calculateur moteur 21 s'assure que des conditions autorisant un arrêt du moteur thermique 11 sont vérifiées. Ces conditions sont vérifiées notamment lorsqu'un niveau de stockage d'énergie d'une batterie du véhicule est supérieur à un seuil de chargement et lorsqu'une température du moteur thermique 11 est inférieure à un seuil de température. Dans le cas contraire, l'arrêt du moteur thermique 11 ne sera pas autorisé.

La procédure d'arrêt du moteur thermique 11 peut se dérouler avec le levier de vitesses 18 situé initialement dans la position de conduite "D" autorisant une fermeture de l'embrayage K0 ou dans la position neutre "N" dans laquelle l'embrayage K0 doit demeurer ouvert. Dans la plupart des cas, le conducteur ne passe pas le levier de vitesses 18 de la position de conduite "D" à la position neutre "N" avant que le véhicule soit à l'arrêt. On entend par "arrêt", un véhicule ayant une vitesse de 0Km/h, c'est-à-dire que le véhicule n'est plus en déplacement.

Dans le cas où l'arrêt moteur se déroule avec le levier de vitesses 18 sur la position de conduite "D", le calculateur moteur 21 commande, dans une étape 102, un prélèvement de couple au moteur thermique 11, par fermeture au moins partielle de l'embrayage K0, de façon à accélérer une chute de régime du moteur thermique 11 lors de son arrêt. Avantageusement, le couple prélevé au moteur thermique 11 est repris par un système de freinage du véhicule automobile. Grâce à ce prélèvement de couple, le régime du moteur 11 passe rapidement la zone d'excitation du mode propre du double volant amortisseur pendulaire 12, ce qui permet d'arrêter le moteur thermique 11 sans bruit (cf. étape 103).

Dans un nombre de cas réduits dans lesquels le levier de vitesses 18 passe de la position de conduite "D" à la position neutre "N" avant que le calculateur moteur 21 autorise le lancement de la procédure d'arrêt du moteur thermique 11 (cf. condition 104), le calculateur moteur 21 inhibe l'arrêt du moteur thermique 11 dans une étape 105.

Le conducteur pourra éventuellement s'étonner que le moteur thermique 11 ne s'arrête pas alors que son arrêt est attendu, mais comme il existe plusieurs cas dans lesquels le calculateur moteur 21 n'est pas autorisé à piloter un arrêt du moteur thermique 11, notamment lorsque la climatisation du véhicule est activée ou lorsqu'un niveau de charge de la batterie est trop faible, ou lorsque le moteur thermique 11 est trop chaud, le conducteur pourra penser que le véhicule se trouve dans une de ces situations de vie.

Si le conducteur souhaite un arrêt du moteur thermique 11, il pourra couper le contact à la clef ou via l'activation d'un mécanisme d'arrêt équivalent de type bouton mécanique ou logiciel. Dans ce cas, le conducteur entendra le bruit des pendules 23 à l'arrêt du moteur, puisqu'aucun prélèvement de couple par l'embrayage K0 de la boîte de vitesses 13 ne peut être effectué lorsque le levier de vitesses 18 est en position neutre. Toutefois, le conducteur ayant effectué une action pour demander l'arrêt du moteur 11, il sera moins étonné du bruit qui l'informera que son action est réalisée.

## Revendications

1. Procédé de pilotage d'une chaîne de traction (10) pour véhicule automobile comportant:
- un moteur thermique (11),
- un dispositif de filtrage des acyclismes (12) du moteur thermique (11),
- une boîte de vitesses automatique (13) associée à un levier de vitesses (18),
- un embrayage (K0) monté d'une part entre le dispositif de filtrage des acyclismes (12) du moteur thermique (11) et d'autre part la boîte de vitesses (13),
**caractérisé en ce que** ledit procédé comporte:
- une étape de détection de conditions autorisant un lancement d'une procédure d'arrêt du moteur thermique (11), et
- dans le cas où le levier de vitesses (18) est dans une position de conduite (D) autorisant une fermeture de l'embrayage (K0), ledit procédé comporte une étape de prélèvement de couple au moteur thermique (11), par fermeture au moins partielle de l'embrayage (K0), de façon à accélérer une chute de régime du moteur thermique (11) lors de son arrêt, ou
- dans le cas où le levier de vitesses (18) est dans une position neutre (N) dans laquelle l'embrayage (K0) doit demeurer ouvert, ledit procédé comporte une étape d'inhibition d'arrêt dudit moteur thermique (11).

2. Procédé selon la revendication 1, **caractérisé en ce que** les conditions autorisant le lancement de la procédure d'arrêt du moteur thermique (11) sont constituées par la détection d'un appui sur une pédale de frein, ainsi que la détection d'une vitesse du véhicule automobile sous un seuil prédéfini.

3. Procédé selon la revendication 1 ou 2, **caractérisé en ce que** des conditions autorisant un arrêt du moteur thermique (11) sont vérifiées avant de prélever le couple au moteur thermique (11).

4. Procédé selon la revendication 3, **caractérisé en ce que** les conditions autorisant un arrêt du moteur thermique (11) sont vérifiées notamment lorsqu'un niveau de stockage d'une batterie du véhicule est supérieur à un seuil de chargement et lorsqu'une température du moteur thermique (11) est inférieure à un seuil de température.

5. Procédé selon l'une quelconque des revendications 1 à 4, **caractérisé en ce que** le couple prélevé au moteur thermique (11) est compris entre 2 et 15 Nm.

6. Procédé selon l'une quelconque des revendications 1 à 5, **caractérisé en ce que** le couple prélevé au moteur thermique (11) est repris par un système de freinage du véhicule automobile.

7. Procédé selon l'une quelconque des revendications 1 à 6, **caractérisé en ce que** le moteur thermique (11) est un moteur turbocompressé à trois cylindres de type essence.

8. Procédé selon l'une quelconque des revendications 1 à 7, **caractérisé en ce que** la boîte de vitesses (13) est une boîte de vitesses à double embrayage (K1, K2).

9. Procédé selon l'une quelconque des revendications 1 à 8, **caractérisé en ce que** le dispositif de filtrage des acyclismes (12) est un double volant amortisseur de type pendulaire.

10. Calculateur moteur (21) **caractérisé en ce qu'**il comporte une mémoire (211) stockant des instructions logicielles pour la mise en œuvre du procédé de pilotage d'une chaîne de traction tel que défini selon l'une quelconque des revendications précédentes.

## Patentansprüche

1. Verfahren zum Steuern einer Traktionskette (10) für ein Kraftfahrzeug, umfassend :
- eine Wärmekraftmaschine (11),
- eine Vorrichtung zum Filtern der Azyklismen (12) der Wärmekraftmaschine (11),
- ein Automatikgetriebe (13), das einem Schalthebel (18) zugeordnet ist,
- eine Kupplung (K0), die einerseits zwischen der Acyclismus-Filtervorrichtung (12) der Wärmekraftmaschine (11) und andererseits dem Getriebe (13) montiert ist,
**dadurch gekennzeichnet, dass** das Verfahren umfasst:
- einen Schritt zum Erfassen von Bedingungen, die den Start eines Verfahrens zum Stoppen der Wärmekraftmaschine (11) zulassen, und
- in dem Fall, in dem sich der Schalthebel (18) in einer Fahrposition (D) befindet, die ein Schließen der Kupplung (K0) erlaubt, umfasst das Verfahren einen Schritt des Entnehmens von Drehmoment von der Wärmekraftmaschine (11) durch zumindest teilweises Schließen die Kupplung (K0), um einen Drehzahlabfall der Wärmekraftmaschine (11) zu beschleunigen, wenn sie stoppt, oder
- in dem Fall, in dem sich der Schalthebel (18) in einer neutralen Position (N) befindet, in der die Kupplung (K0) offen bleiben muss, umfasst das Verfahren einen Schritt des Verhinderns des Stoppens der Wärmekraftmaschine (11).

2. Verfahren nach Anspruch 1, **dadurch gekennzeichnet, dass** die Bedingungen, die die Einleitung des Vorgangs zum Stoppen der Wärmekraftmaschine (11) zulassen, aus der Erfassung einer Betätigung eines Bremspedals sowie der Erfassung einer Geschwindigkeit des Kraftfahrzeugs unter a bestehen vordefinierte Schwelle.

3. Verfahren nach Anspruch 1 oder 2, **dadurch gekennzeichnet, dass** die Bedingungen, die das Stoppen der Wärmekraftmaschine (11) erlauben, überprüft werden, bevor das Drehmoment von der Wärmekraftmaschine (11) genommen wird.

4. Verfahren nach Anspruch 3, **dadurch gekennzeichnet, dass** die ein Abstellen des Verbrennungsmotors (11) zulassenden Bedingungen überprüft werden, insbesondere wenn ein Ladezustand einer Batterie des Fahrzeugs größer als eine Ladeschwelle ist und wenn eine Temperatur der Motorthermik (11) unterhalb einer Temperaturschwelle liegt.

5. Verfahren nach einem der Ansprüche 1 bis 4, **dadurch gekennzeichnet, daß** das der Wärmekraftmaschine (11) entnommene Drehmoment zwischen 2 und 15 Nm liegt.

6. Verfahren nach einem der Ansprüche 1 bis 5, **dadurch gekennzeichnet, dass** das dem Verbrennungsmotor (11) entnommene Drehmoment von einem Bremssystem des Kraftfahrzeugs aufgenommen wird.

7. Verfahren nach einem der Ansprüche 1 bis 6, **dadurch gekennzeichnet, daß** die Wärmekraftmaschine (11) ein Dreizylinder-Turbomotor vom Benzintyp ist.

8. Verfahren nach einem der Ansprüche 1 bis 7, **dadurch gekennzeichnet, dass** das Getriebe (13) ein Doppelkupplungsgetriebe (K1, K2) ist.

9. Verfahren nach einem der Ansprüche 1 bis 8, **dadurch gekennzeichnet, daß** die Azyklismus-Filtervorrichtung (12) ein Pendelschwungrad mit doppelter Dämpfung ist.

10. Motorcomputer (21), **dadurch gekennzeichnet, dass** er einen Speicher (211) umfasst, der Softwareanweisungen zum Implementieren des Verfahrens zum Steuern einer Traktionskette, wie es gemäß einem der vorhergehenden Ansprüche definiert ist, speichert.

## Claims

1. Method for controlling a traction chain (10) for a motor vehicle comprising :
- a heat engine (11),
- a device for filtering the acyclisms (12) of the heat engine (11),
- an automatic gearbox (13) associated with a gear lever (18),
- a clutch (K0) mounted on the one hand between the acyclism filtering device (12) of the heat engine (11) and on the other hand the gearbox (13),
**characterized in that** said method comprises :
- a condition detection step authorizing the launch of a procedure for stopping the heat engine (11), and
- in the case where the gear lever (18) is in a driving position (D) authorizing closing of the clutch (K0), said method comprises a step of taking torque from the heat engine (11), by closing at least partially of the clutch (K0), so as to accelerate a drop in speed of the heat engine (11) when it stops, or
- in the case where the gear lever (18) is in a neutral position (N) in which the clutch (K0) must remain open, said method comprises a step of inhibiting the stopping of said heat engine (11).

2. Method according to Claim 1, **characterized in that** the conditions authorizing the initiation of the procedure for stopping the heat engine (11) consist of the detection of pressing of a brake pedal, as well as the detection of a speed of the motor vehicle below a predefined threshold.

3. Method according to Claim 1 or 2, **characterized in that** the conditions authorizing stopping of the heat engine (11) are verified before taking the torque from the heat engine (11).

4. Method according to Claim 3, **characterized in that** the conditions authorizing a stoppage of the combustion engine (11) are verified in particular when a storage level of a battery of the vehicle is greater than a charging threshold and when a temperature of the engine thermal (11) is below a temperature threshold.

5. Method according to any one of Claims 1 to 4, **characterized in that** the torque taken from the heat engine (11) is between 2 and 15 Nm.

6. Method according to any one of Claims 1 to 5, **characterized in that** the torque taken from the combustion engine (11) is taken up by a braking system of the motor vehicle.

7. Method according to any one of Claims 1 to 6, **characterized in that** the heat engine (11) is a three-cylinder turbocharged engine of the gasoline type.

8. Method according to any one of Claims 1 to 7, **characterized in that** the gearbox (13) is a double-clutch gearbox (K1, K2).

9. Method according to any one of Claims 1 to 8, **characterized in that** the acyclism filtering device (12) is a double damping flywheel of the pendular type.

10. Engine computer (21) **characterized in that** it comprises a memory (211) storing software instructions for implementing the method for controlling a traction chain as defined according to any one of the preceding claims.
